(19) Europäisches Patentamt
European Patent Office
Office européen des brevets

(11) **EP 2 755 381 A1**

(12) **EUROPEAN PATENT APPLICATION**

(43) Date of publication:
**16.07.2014 Bulletin 2014/29**

(51) Int Cl.:
*H04N 7/01* *(2006.01)*    *H04N 19/00* *(2014.01)*

(21) Application number: **12306309.1**

(22) Date of filing: **23.10.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA
1228 Plan-les-Ouates (CH)**

(72) Inventor: **Frello, Dario
38360 SASSENAGE (FR)**

(74) Representative: **Cabinet Plasseraud
52, rue de la Victoire
75440 Paris Cedex 09 (FR)**

(54) **Motion compensated frame interpolation with frame skipping handling**

(57)     A method of performing motion compensated frame interpolation on an image sequence comprising coded frames, the method comprising:
- decoding the coded frames;
- obtaining characteristics of the decoded frames;
- determining a group of successive decoded frames that are identical; and,
- performing a motion compensated frame interpolation between a first frame and a second frame, the motion compensated frame interpolation being based on at least the characteristics of the group of decoded frames.

    A computer program product.

    An apparatus for performing the motion compensated frame interpolation.

    A wireless device comprising the apparatus.

## FIG. 3

## Description

### TECHNICAL FIELD

The proposed solution relates to method, apparatus, receiver and wireless device for handling frame skipping in motion compensated frame interpolation.

### BACKGROUND

The convergence of telecommunication, Internet and multimedia technologies have created a multitude of multimedia applications such as Video on Demand (VoD), video conferencing, Internet Protocol television (IPTV) or mobile TV. Within these applications most digital video content is represented in a compressed format to conserve the storage space and communication bandwidth.

With the view of meeting these constraints, a huge number of video compression techniques have being developed, such as MPEG-4 or H.264, consequently provoking an exponential growth of the available video formats in the past few years.

However, a given receiving device may only be able to support few video formats to the end that costs of implementations may be limited. In such situation, an unsupported video format has to be modified to another one supported by the device in order for the user to view the video.

Frame rate up-conversion (FRUC) is an important aspect of the processing in multimedia applications that enables the translation of a video encoded with a specific frame rate to a different frame rate. Frame rate represents the number of frames per second in a video. FRUC generally consists of motion estimation and motion compensated frame interpolation (MCFI) operations. Namely, the motion of objects in a video is exploited to generate interpolated frames that are temporally located between the original frames.

In video transmission of multimedia applications, due to limited storage space or bandwidth, a video encoder may not able to encode all incoming frames. Instead, the encoder may drop some frames by subsampling the video at a fraction of the original rate, and encode only the low frame rate signal, which can be as low as one to two frames per second for some applications. For instance, a video might be encoded at 15 frames per second (fps) instead of an original 30 fps due to the dropping of certain frames. This is called frame skipping. As a result of this problem, some of the successive non-skipped frames may be identical depending on the original video characteristics and bandwidth requirements. This results in jerky motion (i.e. small interruptions in the video) and therefore, interpolation such as MCFI is required at the decoder to increase the frame rate back to its original rate.

Unfortunately, the MCFI is agnostic to the content of the processed frames. Therefore, two successive non-skipped frames that are identical and presented at the input of the MCFI would generate a set of identical interpolated frames. This is a problem, since the output video will appear jerky, especially in areas of large or complex motion.

Seeing that, problem of artefacts observed while performing a MCFI on successive non-skipped frames that are identical is not adequately addressed and do not offer proper solutions.

### SUMMARY

This problem may be overcome by considering only the successive non-skipped frames that are not identical during the motion compensated frame interpolation.

Indeed, a first aspect proposes a method of performing motion compensated frame interpolation on an image sequence comprising successive coded frames, the method comprising:

- decoding the successive coded frames;
- obtaining characteristics of the successive decoded frames;
- determining a group of successive decoded frames that are identical in terms of content; and,
- performing a motion compensated frame interpolation between a first frame and a second frame corresponding to the first decoded frame of the group and the subsequent decoded frame to the last frame of the group, respectively, said motion compensated frame interpolation being based on at least the characteristics of the group of successive decoded frames.

That way, interpolation is performed only between frames that are not identical in terms of content.

A second aspect relates to a computer program product comprising a computer readable medium, having stored thereon one or more stored sequences of instructions being loadable into a processor and adapted to cause, when executed by the processor, execution of the steps as defined in the first aspect of the proposed solution.

A third aspect relates to an apparatus for performing motion compensated frame interpolation on an image sequence comprising successive coded frames, the apparatus comprising a processor adapted to:

- decode the successive coded frames;
- obtain characteristics of the successive decoded frames;
- determine a group of successive decoded frames that are identical in terms of content; and,
- perform a motion compensated frame interpolation between a first frame and a second frame respectively corresponding to the first decoded frame of the group and the subsequent decoded frame to the last frame of the group, the motion compensated frame interpolation being based on at least the characteristics of the group of successive decoded frames.

A fourth aspect relates to a wireless device comprising a receiving unit configured to receive coded frame and an apparatus as defined in the third aspect of the proposed solution.

Thus, in a receiver embodying the principles of such mechanism, weakness of state of the art mechanism is overcome by scrutinising the content of successive decoded frames in order to identify whether frame skipping has been used on the coded frames and also whether groups of successive decoded frames have identical content. This knowledge is thus utilised to operate the motion compensation frame interpolation such that interpolation is performed only between frames that are not identical in terms of content.

In one embodiment, the characteristics of the successive decoded frames comprise information regarding trajectories of objects inside the successive decoded frames that are identical in terms of content. These information can be computed during motion estimation process and can be used to detect whether two or more frames are identical or not.

In another embodiment, the characteristics of the successive decoded frames comprise motion vectors of the objects inside the successive decoded frames that are identical in terms of content. These information can also be computed during motion estimation process and can be used to detect whether two or more frames are identical.

In accordance with the proposed solution, the characteristics of the successive decoded frames may comprise the number of successive decoded frames that are identical in terms of content. By knowing this number, the motion compensated frame interpolation process easily knows how many decoded frames should not be considered in the interpolation process.

If desired, an instantaneous output rate of the motion compensated frame interpolation can be defined as the product of a target output rate and the number of successive decoded frames that are identical in terms of content, wherein the target output rate is the default output rate of the motion compensated frame interpolation. This instantaneous output rate can be instructed to the motion compensated frame interpolation, for instance, at the beginning of the process or in real-time while the process is ongoing. This way, the output rate of motion compensated frame interpolation is made dynamic according to the number of skipped frames so as to maintain a proper flow of the image sequence between decoded frames.

In accordance with embodiments, an instantaneous interpolation ratio of the motion compensated frame interpolation can be defined as the product of a target interpolation ratio and the number of successive decoded frames that are identical in terms of content, wherein the target interpolation rate is the default interpolation rate of the motion compensated frame interpolation. This interpolation ratio can be instructed to the motion compensated frame interpolation, for instance, at the beginning of the process or in real-time while the process is ongoing. This way, the interpolation ratio of motion compensated frame interpolation is made dynamic according to the number of skipped frames such as to maintain a proper flow of the image sequence between decoded frames.

**BRIEF DESCRIPTION OF THE DRAWINGS**

A more complete understanding of the proposed solution may be obtained from a consideration of the following description in conjunction with the drawings, in which:

FIG. 1 is a block diagram illustrating a prior art embodiment of a motion compensated frame interpolation.
FIG. 2 is a block diagram illustrating an embodiment of a motion compensated frame interpolation in accordance with the proposed solution.
FIG. 3 is a block diagram illustrating another embodiment of a motion compensated frame interpolation in accordance with the proposed solution.
FIG. 4 is a block diagram illustrating yet another embodiment of a motion compensated frame interpolation in accordance with the proposed solution.
FIG. 5 is a flow diagram illustrating an embodiment in accordance with the proposed solution.

**DETAILED DESCRIPTION OF EMBODIMENTS**

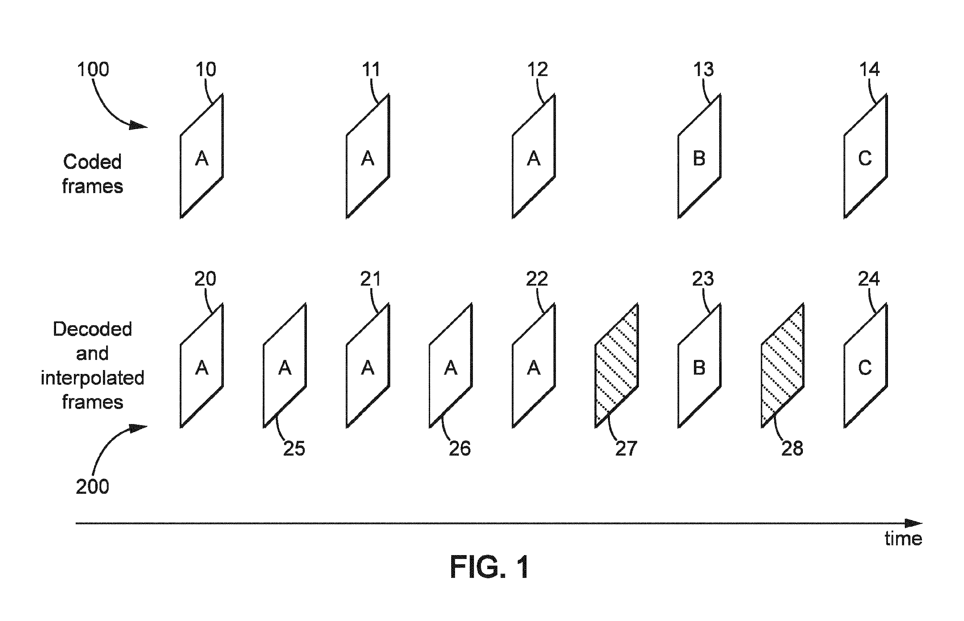

FIG. 1 is a block diagram illustrating schematically a prior art embodiment of a motion compensated frame interpolation (MCFI).

Referring to FIG. 1, there is shown therein an image sequence 100 comprising five successive coded frames 10, 11, 12, 13, 14. The compression technique used in the video sequence 100 might be any compression technique such as, for instance, MPEG-1/2/4 or H.261/263/264. Within each coded frame 10, 11, 12, 13, 14 there is a specific content A, B or C. Namely, successive coded frames 10, 11, 12 contain the content A, frame 13 contains the content B and frame 14 contains the content C. Each content A, B, C might be whatever type of image such as images from for instance Foreman, Football, Mobile or Table videos usually used in image processing literature.

The video sequence 100 contains three successive coded frames 10, 11, 12 that have the same content A, then the subsequent coded frames 13, 14 have different content B and C respectively.

Referring to FIG. 1, there is also shown therein an image sequence 200 comprising five successive decoded frames 20, 21, 22, 23, 24 and four interpolated frames 25, 26, 27, 28. Decoded and interpolated frames 20, 21, 22, 23, 24, 25, 26, 27, 28 are generally sent later on to a display process, which displays them.

Successive decoded frames 20, 21, 22, 23, 24 correspond to successive coded frames 10, 11, 12, 13, 14 after a video decoding process has been performed on the latter ones according to a compression technique specification substantially similar to those already described above. Interpolated frames 25, 26, 27, 28 correspond to frames that have been generated by interpolation based on one or several successive coded frames 10, 11, 12, 13, 14 according to prior art implementation of MCFI. Depending on which frame coded 10, 11, 12, 13, 14 is used, the interpolation method might be bidirectional or unidirectional, where the latter can be either in backward or forward direction.

In the rest of the description, we will consider a bidirectional interpolation where at least two successive decoded frames 20, 21, 22, 23, 24 are used to obtain interpolated frames 25, 26, 27, 28. But it is important to notice that the proposed solution might also be embodied with a unidirectional interpolation. We will also consider an interpolation ratio of 2 where interpolated frames 25, 26, 27, 28 are temporally located in the middle of two successive decoded frames 20, 21, 22, 23, 24. For instance, it corresponds to the case were an image sequence at 15 fps is converted into another image sequence at 30 fps (i.e. interpolation ratio = 30fps/15fps=2). Others interpolation ratio might also be used with the proposed solution such as ratio 2.5 commonly used in the conversion an image sequence with a frame rate of 24 fps to another image sequence with a frame rate of 60 fps.

For instance, frame 25 is interpolated between decoded frame 20 and decoded frame 21. Similarly, frame 26 is interpolated between decoded frame 21 and decoded frame 22, frame 27 is interpolated between decoded frame 22 and decoded frame 23, and frame 28 is interpolated between decoded frame 23 and decoded frame 24.

As previously explained, successive decoded frames 20, 21, 22, 23, 24 correspond to successive coded frames 10, 11, 12, 13, 14 after a decoding process has been performed on the latter ones. Therefore, successive decoded frames 20, 21, 22 contain the content A, decoded frame 23 contains the content B and decoded frame 24 contains the content C.

Let's now consider interpolated frame 25. Since, successive decoded frames 20, 21 contain the same content A and that bidirectional interpolation is performed on these successive decoded frames 20, 21 to obtain interpolated frame 25, it is easily deduced from the above description that the latter interpolated frame 25 contains the content A as well. In a similar way, interpolated frame 26 contains the content A since it is interpolated between decoded frame 21 and 22, each containing the content A.

Following the previous reasoning, decoding frame 27 does not contain the same content as in the successive decoded frames 22, 23 used for the interpolation. In fact, successive decoded frames 22, 23 contain different content i.e. content A, B respectively. Analogously, interpolated frame 28 does not contain the same content as in the successive decoded frames 23, 24 used for the interpolation, since successive decoded frames 23, 24 contain different content i.e. content B, C respectively.

A problem in prior art implementation of MCFI consist in the fact that the image sequence 200 will appear jerky, specially in the image sequence made of successive decoded frames 20, 25, 21, 26, 22. This is due to the continuous repetition of the same content A in all the successive decoded frames 20, 25, 21, 26, 22 of the image sequence 200. During the display process of the latter image sequence 200, objects movements would appear sudden and abrupt.

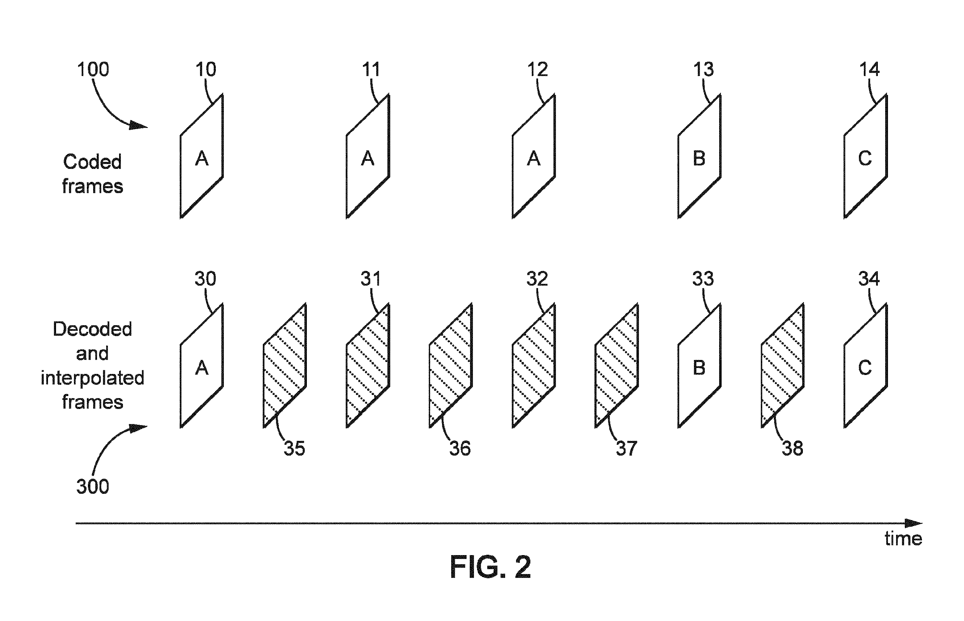

FIG. 2 is a block diagram illustrating schematically an embodiment of a MCFI in accordance with the proposed solution.

Referring to FIG. 2, there is shown therein the already described image sequence 100 from FIG. 1. There is also shown therein an image sequence 300 comprising three successive decoded frames 30, 33, 34 and six interpolated frames 31, 32, 35, 36, 37, 38. Decoded and interpolated frames 30, 31, 32, 33, 34, 35, 36, 37, 38 are generally sent later on to the display process, which displays them.

Decoded frames 30, 33, 34 correspond to coded frames 10, 13, 14 after a video decoding process has been performed on the latter ones according to a compression technique specification substantially similar to those already described above. Interpolated frames 31, 32, 35, 36, 37, 38 correspond to frames that have been generated by interpolation based on one or several successive coded frames 10, 11, 12, 13, 14 according to the proposed solution. As said earlier it is here considered a bidirectional interpolation where at least two successive decoded frames 30, 33, 34 are used to obtain interpolated frames 31, 32, 35, 36, 37, 38. But it is important to notice that the proposed solution might also be embodied with a unidirectional interpolation. It is also considered an interpolation ratio of 2 as already explained above. Others interpolation ratio might also be used with the proposed solution such as ratio 2.as already explained above.

In the proposed solution, successive decoded frames 30, 33, 34 are scrutinised in order to obtain their characteristics. These characteristics of successive decoded frames 30, 33, 34 are used to pick out content redundancy. In fact, as MCFI is agnostic to the content of the processed frames, two successive non-skipped frames that are identical, in terms of content, and presented at the input of the MCFI would generate a set of identical interpolated frames. For that reason, the proposed solution consists in dropping one or more successively repeated frames such that MCFI is performed between frames that are not identical. In other words, groups of successive decoded frames that are identical in terms of content are identified and some of them are further discarded for the rest of the motion compensated interpolation process.

In order to know which frames need to be dropped, characteristics of successive decoded frames 30, 33, 34 need to be obtained. For instance information regarding trajectories of objects inside the successive decoded frames 30, 33, 34 that are identical in terms of content may be obtained. Another possibility consists in obtaining the motion vectors of the objects inside the successive decoded frames 30, 33, 34 that are identical in terms of content. Yet another possibility consists in obtaining the number of successive decoded frames 30, 33, 34 that are identical in terms of content.

Obtaining these characteristics could be performed by any means capable of extracting image characteristics from a decoded image or from a set of decoded images. Such means are readily available to the one with ordinary skills in the art, so that it does not appear be necessary to provide any further detail in that respect, for the purpose of the present description.

Referring back to FIG. 2, it can be noticed that interpolated frames 31, 32, 35, 36, 37 are interpolated between decoded frame 30 and decoded frame 33, and also that interpolated frame 38 is interpolated between decoded frame 33 and decoded frame 34.

Namely, decoded frame 38 is equivalent, in terms of content, to decoded frame 28 as it has been described above in accordance to FIG. 1. This is because decoded frame 38 is an interpolated frame between successive decoded frames 33, 34 and that the latter frames are similar, in terms of content, to successive decoded frames 23, 24 used for obtaining interpolated frame 28.

Regarding, interpolated frames 31, 32, 35, 36, 37, the process is a little bit different. Hence, let's consider an embodiment which precise the decoding and interpolation process for these frames.

In the following description, we will consider that the decoding and interpolation process are performed by taking into consideration two frames at the time. Others embodiment where more than two frames are processed at the time are intended to be encompassed by the proposed solution as well.

First, successive coded frames 10, 11 characteristics are analysed to compare their content. If it turns out that they are identical, then one of the successive coded frames 10, 11 would be discarded and not presented to the decoding and interpolation process. In this example, successive coded frames 10, 11 have the same content A, and it is decided, according to an embodiment, to discard the coded frame 11 and keep the coded frame 10 for the rest of the process.

In a second step, the remaining coded frame 10 and the subsequent available frame 12 are both considered together for content comparison. Again, if it turns out that they are identical, then of one of the successive coded frames 10, 12 would be discarded and not presented to the decoding and interpolation process. In this case, successive coded frames 10, 12 have the same content A, and it is decided to discard the coded frame 12 and keep the coded frame 10 for the rest of the process.

In a third step, the remaining coded frame 10 and the subsequent available frame 13 are both considered together for content comparison. Again, if it turns out that they are identical, then of one of the successive coded frames 10, 13 would be discarded and not presented to the decoding and interpolation process. In this case, successive coded frames 10, 13 do not have the same content since they contain A and B respectively. Therefore, successive coded frames 10, 13 are presented to the decoding and interpolation process.

During the decoding and interpolation process, coded frame 10 is converted into the decoded frame 30 and coded frame 13 is converted into the decoded frame 33. Regarding the interpolated frames 31, 32, 35, 36, 37, it is important to remember that successive coded frames 11, 12 have been skipped during the decoding process due to redundancy with coded frame 10. Therefore, in order to maintain a constant frame rate between decoded frame 30 and decoded frame 33, more interpolated frames 31, 32, 35, 36, 37 need to be generated.

For instance, if we consider that the image sequence 100 is encoded at 15 fps and that it needs to be converted into the image sequence 300 at 30 fps for better quality display on a receiver, then the instantaneous interpolation ratio that need to be employed in the decoding process is equal to 6, when successive coded frames 11, 12 are not considered.

In fact, the temporal distance between remaining successive coded frames 10 and 13, presented to the decoding and interpolation process, is three times greater than the target interpolation ratio that exist between two successive coded frames, wherein the target interpolation ratio corresponds to a default interpolation ratio of motion compensated frame interpolation process. Correlatively, the target interpolation ratio, set earlier at 2 (i.e.; = 30fps/15fps), need to multiplied by three. In other words, it can just be said that there are three successive coded frames 10, 11, 12 that have an identical content, and that the instantaneous interpolation ratio that need to be used to maintain a proper flow of the image sequence 300 between successive decoded frames 30 and decoded frame 33 can be represented by the following formula (1):

$$Instantaneous\_interpolation\_ratio = target\_interpolation\_ratio *$$
$$nb\_identical\_successive\_decoded\_frames \quad (1)$$

With the view of the previous example formula (1) gives the following results:

$$Instantaneous\_interpolation\_ratio = 2 * 3 = 6$$

Additionally, another formula (2) might be derived from formula (1) such that it would also be possible to calculate the instantaneous frame rate that need to be obtained at the output of the motion compensated frame interpolation process wherein the target output rate corresponds to a default output rate of the motion compensated frame interpolation, which reads:

$$Instantaneous\_output\_frame\_rate = target\_output\_frame\_rate *$$
$$nb\_identical\_successive\_decoded\_frames \quad (2)$$

With the view of the previous example formula (2) gives the following results as follows:

$$Instantaneous\_output\_frame\_rate = 30 * 3 = 90$$

Another formula (3) that could be used to determine the instantaneous output frame rate as calculated by formula (2) could be based on the input frame rate of the successive coded frames and the instantaneous interpolation ratio as calculated by formula (1):

$$Instantaneous\_output\_frame\_rate = input\_frame\_rate * Interpolation\_ratio \quad (3)$$

With the previous example, formula (3) gives the following results:

$$Instantaneous\_output\_frame\_rate = 15 * 6 = 90$$

In this case, it means that 90 frames per second need to be generated in order to maintain a proper flow of the image sequence 300 between decoded frame 30 and decoded frame 33.
With this embodiment of the proposed solution, the image sequence 300 appears less jerky than it was in prior art embodiments. Therefore, during the display process of the latter image sequence objects movements would appear smoother.

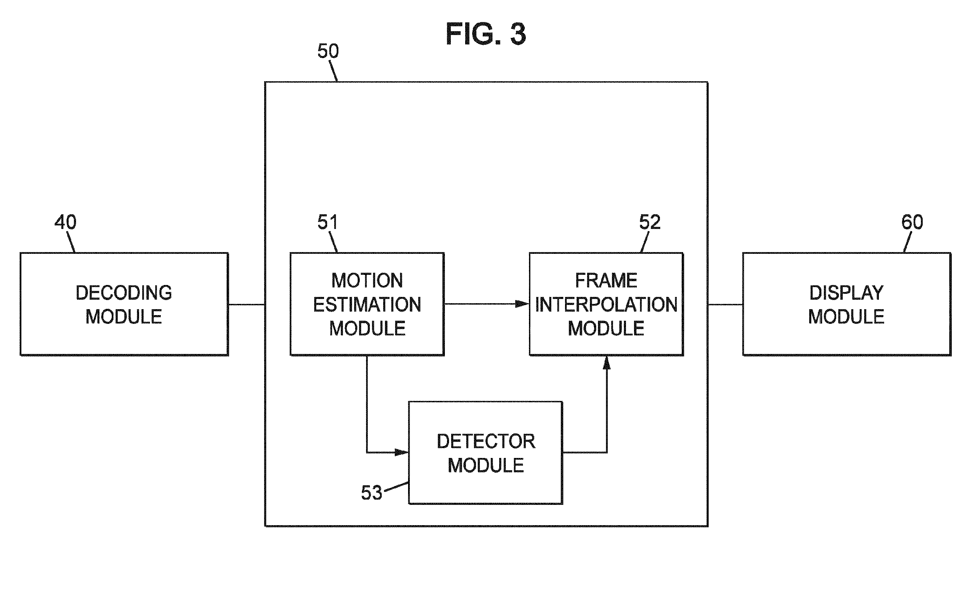

FIG. 3 is a block diagram illustrating schematically an embodiment of a motion compensated frame interpolation in accordance with the proposed solution.
Referring to FIG. 3, there is shown therein a decoding module 40, a MCFI module 50 and a display module 60. The decoding module 40 is adapted to decode successive coded frames 10, 11, 12, 13, 14 presented at its input.

Decoded frames 30, 33, 34 are then transmitted to the MCFI module 50. The MCFI module 50 comprises a motion estimation module 51, a frame interpolation module 52 and a detection module 53. The motion estimation module 51 is configured to estimate information regarding trajectories of objects and/or moving objects between successive frames by calculating motion vectors (MVs). For the rest of the description, it will be consider only MVs even though other information regarding trajectories of objects may have been used as well.

The decoded images and the MVs are then transferred to the frame interpolation module 52. The frame interpolation module 52 is configured to generate new intermediate frames along with the obtained MVs. The detection module 53 is configured to determine whether a number of frames are identical.

In order to identify identical successive frames, the detection module 53 is coupled to the motion estimation module 51, such that it can obtain the calculated MVs in order to get the motion field (MF). It should be remembered that a MF is defined by the collection of all MVs within a frame. In order to evaluate the quality of the MVs so that true MF is found, the detection module 53 is configured to calculate a sum of absolute difference (SAD) based on algorithms, for example like the enhanced predictive zonal search (EPZS) algorithm. Hence, for instance, the detection module is able to determine whether two frames are identical, for instance, by computing the MF and the SAD. In fact, in the case where SAD = 0 and MF is null for two successive frames, it can be assessed that they are identical. Others implementations providing for the detection module 53 being able to identify whether two or more frames are identical are intended to be encompassed by the proposed solution as well.

Once the identical frames have been identified, the detection module 53 is also connected to the frame interpolation module 52, such that it can manage the behaviour of the frame interpolation module 52. In fact, the detection module 53 is also configured to instruct the frame interpolation module 52 to perform the interpolation only between the frames that are not identical. Additionally, the detection module 53 is able to instruct the frame interpolation module 52 to change its interpolation rate and/or its output frame rate according for instance to equations (1), (2) or (3) as described above.

After the frame interpolation has been performed, both the decoded frames and interpolated frames are sent to the display module 60. The display module 60 might provide a Graphical User Interface (GUI) to a user such that operations such as play, stop and rewind could be selected. Then, display module 60 is configured to display the image sequence to the user.

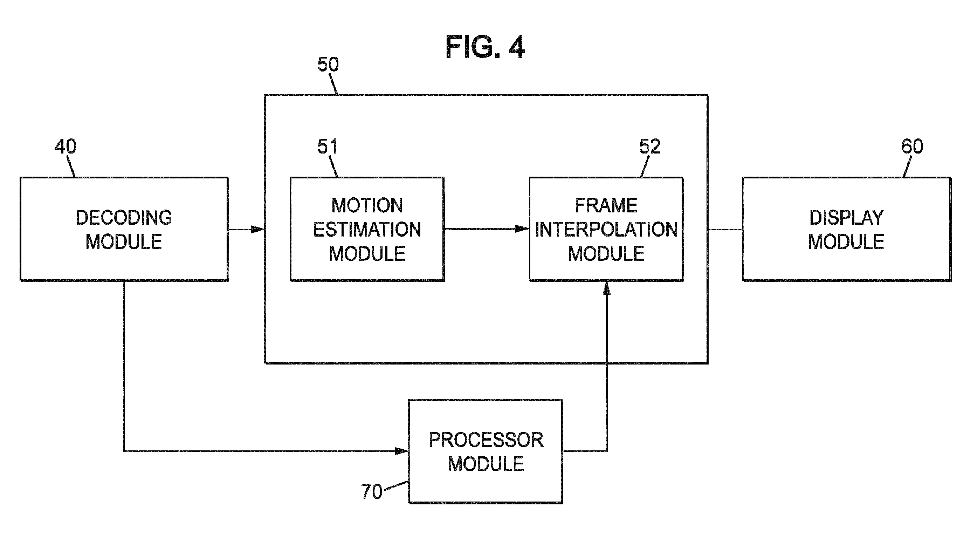

FIG. 4 is a block diagram illustrating schematically an embodiment of a MCFI in accordance with the proposed solution.

Referring to FIG. 4, there is shown therein the decoding module 40, the MCFI module 50 and the display module 60 already described in accordance with FIG. 3. The first main difference is that the MCFI module 50 only comprises the motion estimation module 51 and the frame interpolation module 52. Another module, the processor module 70 is coupled on one hand to the decoding module 40 and on the other hand to the frame interpolation module 52. The processor module 70 is configured to determine whether a number of frames are identical.

The connection with the decoding module 40 is used to obtain information about the decoded frames. In fact, the processor module 70 is configured to identify which frames should not be considered by the frame interpolation module 52, based on at least the latter information. The identified frames would then be communicated to the frame interpolation module 52 such that there would be skipped during the interpolation process.

In order to identify such frames, the processor module might utilise some information already known by the decoder module 40 after the decoding of a frame has been performed. For instance, in most transport protocol, such as MPEG-2 systems or Real-Time Protocol (RTP), used for transporting multimedia data across networks there is provided a timestamp field that might be used in this case. Timestamps are generally used by receiver to characterize the instant in time when the image must be displayed and can also used by a decoding module 40 to synchronise the image sequence flow.

For instance, in the standard H.264, Supplemental Enhancement Information (SEI) messages which are extra information that can be inserted into a bitstream might be use to obtain or determine the timestamps.

In other words, it can be said that each frame of an image sequence might be identified by a timestamp and that two successive frames have successive time stamp as well, that is incremented for instance by one between two frames. Therefore, with this knowledge the processor module 70 is configured to detect frame skipping in an image sequence. In fact, since timestamps should be regular for successive frames with an increment, for instance of one, frame skipping might easily be detected by identifying irregularities in a series of timestamps.

For instance, let's consider four successive coded frames with the following exemplary timestamps: 4035, 4036, 4037, 4038. As it can be seen, the timestamps are regular in this case with an increment of one. Therefore, it can be deduced by the processor module 70 that no frame skipping has been performed in these successive coded frames.

Conversely, let's consider another four successive coded frames with the following corresponding exemplary timestamps: 5027, 5030, 5031, 5032. In this case, there is an irregularity between the two first timestamps: 5027 and 5030, whereas no such irregularity is observed between the subsequent timestamps, i.e. 5030 and 5032. In fact, between the timestamp 5027 and the timestamp 5030, there are two timestamps that have been skipped, i.e. timestamps 5028 and 5029.

Finally, it shall be recalled that when there is a skipped frame, the decoding module 40 does not perform any decoding and just copy the previously decoded frame. Therefore, by combining at least the knowledge of the timestamps and the knowledge of the non-decoded frames, the processor module 70 is capable of deducing which frames should not be considered by the frame interpolation module 52 due to redundancy when certain frames have been skipped. Others implementations providing for the processor module 53 being able to identify whether two or more frames have been skipped during the decoding process are also intended to be encompassed by the proposed solution.

Once the skipped frames have been identified, the processor module 70 is also coupled to the frame interpolation module 52, such that it can manage the behaviour of the frame interpolation module 52. In fact, the processor module 70 is also configured to instruct the frame interpolation module 52 to perform the interpolation only between the frames that were not skipped by knowing the number of skipped frames, or their relative location in time, such that interpolation rate or output frame rate could be adjusted to maintain a proper flow of the image sequence. Additionally, the processor module 70 is able to instruct the frame interpolation module 52 to change its interpolation rate and/or its output frame rate according for instance to equations (1) and (2) described above.

After the frame interpolation has been performed, both the decoded frames and interpolated frames are sent to the display module 60. The display module 60 might provide a Graphical User Interface (GUI) to a user such that operations such as play, stop and rewind could be selected. Then, display module 60 is configured to display the image sequence to the user.

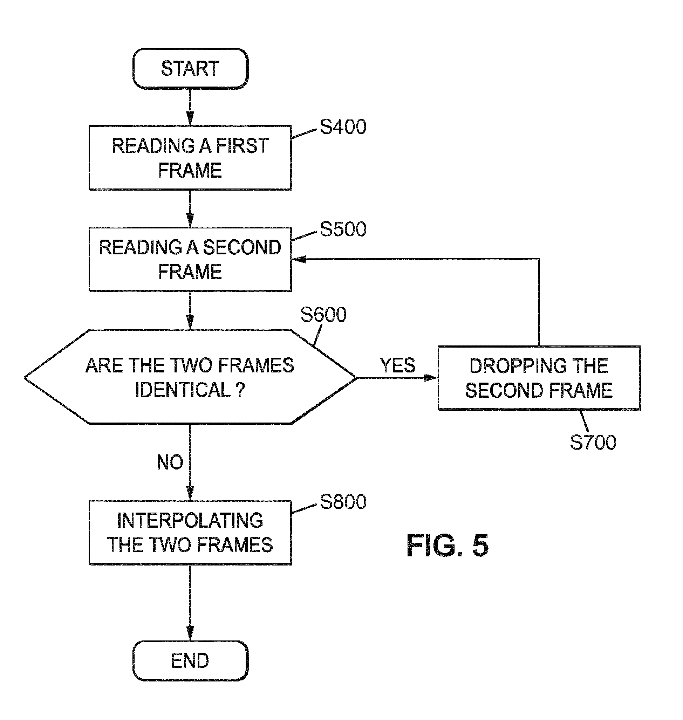

FIG. 5 is a flow diagram illustrating schematically an embodiment in accordance with the proposed solution. The embodiment might, for instance, be embodied in a wireless device or a computer program. The wireless device might have one or more antennas with a transmit section and a receive section for operating one or several communication networks such as GSM, UMTS or LTE, for instance. Depending on the embodiment, additional steps may be added, others removed, and the ordering of the steps rearranged.

Referring to FIG. 5, in step S400, a first frame is received by the receiver. In step S500, a second frame is received by the receiver. The first frame and the second frame are thus successive frames. In a step S600, the content of the first and the second frames are compared to verify whether there are identical, for instance in terms of their content. As described above, in the case where SAD = 0 and MF is null for the first frame and the second frame, it can be assessed that the first frame and the second frame are identical.

If it is the case, in step S700, one of the first frame and the second frame is dropped and won't be considered during the interpolation process. As described above in one embodiment, it is the second frame that is dropped.

Following to that, another second frame is received by the receiver, in step S500. Again in step S600, the content of the first and the second frames would be compared to verify whether there are identical. If it is not the case, in step S800, an interpolation would be performed between the first frame and the second frame. Afterwards, the algorithm stops.

In the claims, the word "comprising" does not exclude other elements or steps, and the indefinite article "a" or "an" does not exclude a plurality. A single module may fulfil the functions of several items recited in the claims. For instance, the decoding module 40 and the MCFI module 50 might be implemented within the same module such as decoder, for instance. Also, the detection module 53 or the processor module 70 might be located inside or outside such decoder as long the described connections described herein or their equivalent are present. However, it is also claimed a wireless device comprising a receiving unit and an apparatus comprising a processor arranged to operate aforementioned process as described in the foregoing. A computer program product implementing aforementioned process as described in the foregoing is also claimed. The mere fact that different features are recited in mutually different dependent claims does not indicate that a combination of these features cannot be advantageously used. Any reference signs in the claims should not be construed as limiting the scope of the proposed solution.

**Claims**

1. A method of performing motion compensated frame interpolation on an image sequence (100) comprising successive coded frames (10, 11, 12, 13, and 14), the method comprising:

   - decoding the successive coded frames;
   - obtaining characteristics of the successive decoded frames;
   - determining a group of successive decoded frames that are identical in terms of content; and,
   - performing a motion compensated frame interpolation between a first frame and a second frame corresponding to the first decoded frame (30) of the group and the subsequent decoded frame (33) to the last frame of the group, respectively, said motion compensated frame interpolation being based on at least the characteristics of the group of successive decoded frames.

**2.** The method of claim 1, wherein the characteristics of the successive decoded frames comprise information regarding trajectories of objects inside the successive decoded frames that are identical in terms of content.

**3.** The method of any of claims 1 to 2, wherein the characteristics of the successive decoded frames comprise motion vectors of the objects inside the successive decoded frames that are identical in terms of content.

**4.** The method of any one of claims 1 to 3, wherein the characteristics of the successive decoded frames comprise the number of successive decoded frames that are identical in terms of content.

**5.** The method of claim 4, wherein an instantaneous output rate of the motion compensated frame interpolation is the product of a target output rate and the number of successive decoded frames that are identical in terms of content, wherein the target output rate is the default output rate of the motion compensated frame interpolation.

**6.** The method of claim 4, wherein an instantaneous interpolation ratio of the motion compensated frame interpolation is the product of a target interpolation ratio and the number of successive decoded frames that are identical in terms of content, wherein the target interpolation rate is the default interpolation rate of the motion compensated frame interpolation.

**7.** A computer program product comprising a computer readable medium, having stored thereon one or more stored sequences of instructions being loadable into a processor and adapted to cause, when executed by the processor, execution of the steps of any one of claims 1 to 6.

**8.** An apparatus for performing motion compensated frame interpolation on an image sequence (100) comprising successive coded frames (10, 11, 12, 13, and 14), the apparatus comprising a processor adapted to:

- decode the successive coded frames;
- obtain characteristics of the successive decoded frames;
- determine a group of successive decoded frames that are identical in terms of content; and,
- perform a motion compensated frame interpolation between a first frame and a second frame respectively corresponding to the first decoded frame (30) of the group and the subsequent decoded frame (33) to the last frame of the group, the motion compensated frame interpolation being based on at least the characteristics of the group of successive decoded frames.

**9.** The apparatus of claim 8, wherein the characteristics of the successive decoded frames comprise information regarding trajectories of objects inside the successive decoded frames that are identical in terms of content.

**10.** The apparatus of any of claims 8 to 9, wherein the characteristics of the successive decoded frames comprise motion vectors of the objects inside the successive decoded frames that are identical in terms of content.

**11.** The apparatus of any of claims 8 to 10, wherein the characteristics of the successive decoded frames comprise the number of successive decoded frames that are identical in terms of content.

**12.** The apparatus of claim 11, wherein an instantaneous output rate of the motion compensated frame interpolation is the product of a given output rate and the number of successive decoded frames that are identical in terms of content, wherein the given output rate is the default output rate of the motion compensated frame interpolation.

**13.** The apparatus of claim 11, wherein an instantaneous interpolation ratio of the motion compensated frame interpolation is the product of a given interpolation ratio and the number of successive decoded frames that are identical in terms of content, wherein the given interpolation rate is the default interpolation rate of the motion compensated frame interpolation.

**14.** A wireless device comprising:

- a receiving unit configured to receive coded frame; and,
- an apparatus as defined in any one of claims 8 to 13.

FIG. 1

**FIG. 2**

EP 2 755 381 A1

# FIG. 3

DECODING MODULE — 40

MOTION ESTIMATION MODULE — 51

FRAME INTERPOLATION MODULE — 52

DISPLAY MODULE — 60

DETECTOR MODULE — 53

50

EP 2 755 381 A1

**FIG. 4**

START

READING A FIRST
FRAME — S400

READING A SECOND
FRAME — S500

ARE THE TWO FRAMES
IDENTICAL ? — S600

YES → DROPPING THE
SECOND FRAME

S700

NO

INTERPOLATING
THE TWO FRAMES — S800

FIG. 5

END

Europäisches
Patentamt

European
Patent Office

Office européen
des brevets

**EUROPEAN SEARCH REPORT**

Application Number

EP 12 30 6309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 006 723 A2 (FUJITSU LTD [JP]) 7 June 2000 (2000-06-07) * figure 1 * * figure 2 * * figure 3 * * figure 5 * * figure 6 * * figure 20 * ----- | 1-14 | INV. H04N7/01 H04N7/26 |
| X | SASAI H ET AL: "Frame-rate up-conversion using reliable analysis of transmitted motion information", ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 5, 17 May 2004 (2004-05-17), pages 257-260, XP010718914, DOI: 10.1109/ICASSP.2004.1327096 ISBN: 978-0-7803-8484-2 * the whole document * ----- | 1-14 | |
| A | US 2009/147853 A1 (DANE GOKCE [US] ET AL) 11 June 2009 (2009-06-11) * figure 1 * * figures 2A, 2B * * figure 3 * * figure 4 * * figure 5 * ----- | 1-14 | TECHNICAL FIELDS SEARCHED (IPC) H04N |
| A | EP 2 157 791 A2 (BROADCOM CORP [US]) 24 February 2010 (2010-02-24) * figures 1,3,5 * * figure 7 * ----- -/-- | 1-14 | |

The present search report has been drawn up for all claims

| Place of search | Date of completion of the search | Examiner |
|---|---|---|
| The Hague | 14 March 2013 | Martinière, Anthony |

EPO FORM 1503 03.82 (P04C01)

| | Europäisches Patentamt European Patent Office Office européen des brevets | **EUROPEAN SEARCH REPORT** | Application Number EP 12 30 6309 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/242748 A1 (MAHADEVAN VIJAY [US] ET AL) 18 October 2007 (2007-10-18)<br>* figure 1 *<br>* figure 2 *<br>* figure 3 * | 1-14 | |
| A | YEN-LIN LEE ET AL: "High frame rate Motion Compensated Frame Interpolation in High-Definition video processing", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 858-861, XP031697181, ISBN: 978-1-4244-4295-9<br>* the whole document * | 1-14 | |

**TECHNICAL FIELDS SEARCHED (IPC)**

The present search report has been drawn up for all claims

| Place of search | Date of completion of the search | Examiner |
|---|---|---|
| The Hague | 14 March 2013 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 30 6309

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2013

| Patent document cited in search report | | | Publication date | Patent family member(s) | | | Publication date |
|---|---|---|---|---|---|---|---|
| EP | 1006723 | A2 | 07-06-2000 | EP | 1006723 | A2 | 07-06-2000 |
| | | | | JP | 2000165821 | A | 16-06-2000 |
| | | | | US | 6778221 | B1 | 17-08-2004 |
| US | 2009147853 | A1 | 11-06-2009 | CN | 101919249 | A | 15-12-2010 |
| | | | | CN | 101919255 | A | 15-12-2010 |
| | | | | CN | 101939992 | A | 05-01-2011 |
| | | | | EP | 2232870 | A2 | 29-09-2010 |
| | | | | EP | 2232871 | A1 | 29-09-2010 |
| | | | | EP | 2232878 | A1 | 29-09-2010 |
| | | | | JP | 2011507404 | A | 03-03-2011 |
| | | | | JP | 2011507405 | A | 03-03-2011 |
| | | | | JP | 2011507406 | A | 03-03-2011 |
| | | | | KR | 20100092506 | A | 20-08-2010 |
| | | | | KR | 20100093112 | A | 24-08-2010 |
| | | | | KR | 20100093113 | A | 24-08-2010 |
| | | | | KR | 20120088006 | A | 07-08-2012 |
| | | | | TW | 200943967 | A | 16-10-2009 |
| | | | | TW | 200943974 | A | 16-10-2009 |
| | | | | TW | 200950528 | A | 01-12-2009 |
| | | | | US | 2009147853 | A1 | 11-06-2009 |
| | | | | US | 2009147854 | A1 | 11-06-2009 |
| | | | | US | 2009148058 | A1 | 11-06-2009 |
| | | | | WO | 2009076466 | A1 | 18-06-2009 |
| | | | | WO | 2009076468 | A2 | 18-06-2009 |
| | | | | WO | 2009076471 | A1 | 18-06-2009 |
| EP | 2157791 | A2 | 24-02-2010 | CN | 101656825 | A | 24-02-2010 |
| | | | | EP | 2157791 | A2 | 24-02-2010 |
| | | | | HK | 1141377 | A1 | 16-11-2012 |
| | | | | KR | 20100022447 | A | 02-03-2010 |
| | | | | TW | 201026054 | A | 01-07-2010 |
| | | | | US | 2010046623 | A1 | 25-02-2010 |
| US | 2007242748 | A1 | 18-10-2007 | BR | PI0709990 | A2 | 02-08-2011 |
| | | | | CA | 2646198 | A1 | 25-10-2007 |
| | | | | EP | 2005736 | A2 | 24-12-2008 |
| | | | | JP | 2009533977 | A | 17-09-2009 |
| | | | | JP | 2013013102 | A | 17-01-2013 |
| | | | | KR | 20090007437 | A | 16-01-2009 |
| | | | | US | 2007242748 | A1 | 18-10-2007 |
| | | | | WO | 2007121342 | A2 | 25-10-2007 |

EPO FORM P0459

For more details about this annex : see Official Journal of the European Patent Office, No. 12/82